# EUROPEAN PATENT APPLICATION

(11) **EP 4 821 966 A1**
(43) Date of publication of application: **14.10.2026**
(21) Application number: 25221609.8
(22) Date of filing: 08.12.2025
(51) Int. Cl.: C08G 59/50

(54) **RESIN FORMULATION, THERMOSET, AND METHOD OF MANUFACTURING THE SAME**

(30) Priority: 09.04.2025 US 202563785826 P
(71) Applicant: Formosa Plastics Corporation, Kaohsiung City (TW); The Texas A&M University System, Bryan, TX 77807 (US)
(72) Inventor: HSU, Yu-Cheng, Kaohsiung City (TW); CHEN, Hsuan-Yin, Kaohsiung City (TW); SUE, Hung-Jue, College Station, 77845 (US); CHEN, Hengxi, College Station, 77843-3127 (US); HWANG, Long-Tyan, Kaohsiung City (TW)
(74) Representative: Lang, Christian

(57) **Abstract**

The present invention relates to a resin formulation, a thermoset and a method of manufacturing the same. The resin formulation includes an epoxy resin, a thermosetting polyimide resin, a modified polyetherimide resin, and an amine curing agent. The modified polyetherimide has a nucleophile and is able to modify the thermosetting polyimide resin, so that the obtained thermoset has a specific phase separation system and good properties of fracture toughness, heat resistance and modulus.

## Description

### BACKGROUND

### Field of Invention

The present invention relates to a resin formulation. More particularly, the present invention relates to a resin formulation, a thermoset, and a method of manufacturing the same using a thermosetting polyimide resin modified by a modified polyetherimide.

### Description of Related Art

An epoxy thermoset has good heat resistance, corrosion resistance, adhesion, wear resistance, an electrical insulation property, and dimensional stability. Therefore, the epoxy thermoset can be widely used in the industries of painting, electronics, aerospace, automobile, sports equipment, etc. However, since the epoxy thermoset has a great cross-linking density and a great internal stress, the epoxy thermoset has disadvantages such as brittleness, low fracture resistance, and low impact resistance, etc. The abovementioned disadvantages are more significant in epoxy thermoset with a higher cross-linking density.

A conventional method to improve the abovementioned disadvantages is to toughen the epoxy thermoset by adding a toughening agent. One method is to form small particles of rubbers and mix them with the resin before cure. An alternate method is to add a low molecular weight polymer as the toughening agent to the resin, so as to form a solution. During curing, the solution undergoes thermally induced phase separation (TIPS) as thermodynamic conditions such as temperature change, thereby forming different phase separation systems. Although improved fracture toughness can be achieved using these method, there are detrimental effects including higher viscosity, and lower glass transition temperature (T_{g}) and thermal stability of the thermoset.

Accordingly, there is a need to provide a resin formulation, a thermoset, and a method of manufacturing the same, so as to improve the abovementioned disadvantages.

### SUMMARY

Therefore, an aspect of the present invention is to provide a resin formulation including an epoxy resin, a thermosetting polyimide resin, a modified polyetherimide, and an amine curing agent, so as to control the phase separation system.

Another aspect of the present invention is to provide a thermoset including specific sea-island morphologies and has excellent fracture toughness.

The other aspect of the present invention is to provide a method of manufacturing the thermoset including adding a thermosetting polyimide resin modified with a modified polyetherimide in an epoxy resin, so as to form a specific phase separation system.

According to the aforementioned aspect, a resin formulation is provided. The resin formulation includes an epoxy resin, a thermosetting polyimide resin, a modified polyetherimide, and an amine curing agent. The thermosetting polyimide resin includes bismaleimide (BMI). Based on the epoxy resin is 100 mol%, a usage amount of the thermosetting polyimide resin is 60 mol% to 90 mol%. The modified polyetherimide includes a nucleophile. The nucleophile includes a hydroxyl group, a sulfhydryl group, a carboxyl group, and/or an amine group. Based on the epoxy resin is 100 use parts, a usage amount of the modified polyetherimide is 5 use parts to 30 use parts. The ratio of amine groups of the amine curing agent and epoxide groups of the epoxy resin is 40 mole % to 90 mole %.

According to some embodiments of the present invention, the resin formulation can selectively include a hardening accelerator. Based on the epoxy resin is 100 use parts, a usage amount of the hardening accelerator is 0.5 use parts to 2.0 use parts.

According to some embodiments of the present invention, a molecular weight of the modified polyetherimide is 5,000 g/mol to 30,000 g/mol.

According to some embodiments of the present invention, the epoxy resin includes bisphenol A epoxy resin, bisphenol F epoxy resin, phenolic epoxy resin, cresol novolac epoxy resin, naphthalene-based epoxy resin, aliphatic epoxy resin, dicyclopentadiene phenol epoxy resin, biphenyl-based epoxy resin, aminophenol, methylenedianiline and tetraglycidyl-4,4'-methylenedianiline or combination thereof.

According to some embodiments of the present invention, the amine curing agent includes aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.

According to another aspect of the present invention, a thermoset is provided. The thermoset includes an epoxy-rich phase and sea-island morphologies. The sea-island morphologies are evenly dispersed in the epoxy-rich phase. The epoxy-rich phase includes an epoxy resin and a thermosetting polyimide resin. Each of the sea-island morphologies includes a core portion, and a thermosetting polyimide resin-rich shell portion, and the core portion is surrounded by the thermosetting polyimide resin-rich shell portion. The core portion includes a modified polyetherimide, and a thermosetting polyimide resin-rich shell portion includes a thermosetting polyimide resin. The stress intensity factor of the thermoset is 0.50 MPa·m^{½} to 3.00 MPa·m^{½}.

According to some embodiments of the present invention, an average particle size of the plurality of sea-island morphologies is 100 nm to 30 µm.

According to the other aspect of the present invention, a method of manufacturing the thermoset is provided. First, an addition step is performed on a thermosetting polyimide resin and a modified polyetherimide at 90°C to 130°C, so as to obtain a first compound. Next, a mixing step is performed on the first compound and the epoxy resin at 90°C to 130°C, so as to obtain a second compound. Then, a curing step is performed on the second compound by using an amine curing agent, so as to obtain a thermoset. Based on the epoxy resin is 100 mol%, a usage amount of the thermosetting polyimide resin is 60 mol% to 90 mol%. The modified polyetherimide includes a nucleophile including a hydroxyl group, a sulfhydryl group, a carboxyl group, and/or an amine group. Based on the epoxy resin is 100 use parts, a usage amount of the modified polyetherimide is 5 use parts to 30 use parts. The ratio of amine groups of the amine curing agent and epoxide groups of the epoxy resin is 40 mole % to 90 mole %.

According to some embodiments of the present invention, a method of manufacturing the thermoset can selectively include a heating step that is performed on the thermosetting polyimide resin at 150°C to 170°C from 10 minutes to 50 minutes before the addition step.

According to some embodiments of the present invention, the method of manufacturing the thermoset can selectively include decreasing a temperature of the second compound to 70°C to 90°C before the curing step.

According to some embodiments of the present invention, the curing step includes a first curing treatment, a second curing treatment, and a third curing treatment. The first curing treatment is performed at 130°C to 150°C for 1 hour to 3 hours. The second curing treatment is performed at 160°C to 195°C for 6 hours to 9 hours. The third curing treatment is performed at 200°C to 230°C for 6 hours to 9 hours.

According to some embodiments of the present invention, the addition step and the mixing step include a stirring treatment respectively. The stirring treatment is performed at 300 revolution per minute (rpm) to 500 rpm.

According to some embodiments of the present invention, the modified polyetherimide is obtained by reacting a polyetherimide and a nucleophile compound, and a weight mole ratio (g: mol) of the polyetherimide and the nucleophile compound is (40~60) g: (0.2-0.3) mol.

According to some embodiments of the present invention, the epoxy resin inlcudes bisphenol A epoxy resin, bisphenol F epoxy resin, phenolic epoxy resin, cresol novolac epoxy resin, naphthalene-based epoxy resin, aliphatic epoxy resin, dicyclopentadiene phenol epoxy resin, biphenyl-based epoxy resin, aminophenol, methylenedianiline and tetraglycidyl-4,4'-methylenedianiline or combination thereof.

According to some embodiments of the present invention, the amine curing agent includes aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.

By applying the resin formulation, the thermoset, and the method of manufacturing the same of present invention, in which by adding a thermosetting polyimide resin modified by a modified polyetherimide in the epoxy resin, the obtained thermoset has a specific phase separation system, thereby having an excellent toughness and maintaining good heat resistance and modulus.

### BRIEF DESCRIPTION OF THE DRAWINGS

The invention can be more fully understood by reading the following detailed description of the embodiment, with reference made to the accompanying drawings as follows:
FIG. 1 illustrates a flow chart of a method of manufacturing the thermoset according to some embodiments of the present invention.
FIG. 2A and FIG. 2B illustrate AFM modulus images of the thermoset samples of Comparative Example 2 and Preparation Example 2 of the thermoset sample, respectively.
FIG. 3A and 3B illustrate curve charts of the normalized Young's modulus of the thermoset sampled of Comparative Example 2 and Preparation Example 2 along the dotted lines shown in FIGs. 2A and 2B, respectively.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

As mentioned above, the present invention provides a resin formulation, a thermoset, and a method of manufacturing the same. The abovementioned resin formulation includes an epoxy resin, a thermosetting polyimide resin, a modified polyetherimide, and an amine curing agent. The modified polyetherimide has a nucleophile that can modify a thermosetting polyimide resin, so that the obtained thermoset can have a specific phase separation system, resulting in excellent toughness, and maintaining good heat resistance, modulus, as well as other related physical properties.

The term "toughness" herein refers to the ability of the thermoset to absorb energy and undergo plastic deformation to resist fracture. In some embodiments, it is better for the thermoset to have a better ability to resist crack from propagation since the occurrence of flaws such as cracks is not completely avoidable in the processing of thermoset products such as structural adhesives and aerospace composites. Therefore, in the aforementioned embodiments, the fracture toughness can be evaluated with stress intensity factor (K_{1C}) or strain energy release rate (G_{1C}) that is the ability of the thermoset to resist crack from propagation.

The term "heat resistance" herein refers to the ability of the thermoset to maintain in a glassy state under high temperature. In some embodiments, the heat resistance can be evaluated with glass transition temperature (T_{g}), which is the temperature at which the thermoset transforms from a glassy state to a rubbery state. In some specific examples, the T_{g} can be measured by a differential scanning calorimeter (DSC) or dynamic mechanical analysis (DMA). The T_{g} measured by the DSC or DMA can be an interval. The temperature corresponding to the beginning of the interval is T_{g} onset, and the temperature corresponding to the middle of the interval is T_{g}.

The term "stiffness" refers to the ability of the thermoset to resist deformation in response to an applied stress. Moreover, stiffness can be evaluated with a ratio of stress and strain in the elastic region, also termed Young's modulus (E).

The term "other related physical properties" is not specifically limited and can include but not limited to elasticity, strength, and plasticity. In some embodiments, the elasticity of the thermoset can be evaluated to storage modulus (G'). In some embodiments, the strength of the thermoset can be evaluated by tensile strength (σ), for example. In some embodiments, the plasticity of the thermoset can be evaluated by elongation at break (δ), for example.

To obtain a thermoset with excellent fracture toughness as well as good heat resistance, and stiffness, the resin formulation used in the present invention can include but not limited to an epoxy resin, a thermosetting polyimide resin, a modified polyetherimide, and an amine curing agent.

The epoxy resin has at least two epoxide groups that can form a cross-linking structure via a curing step. The kinds of epoxy resin can include but not limited to bisphenol A epoxy resin, bisphenol F epoxy resin, phenolic epoxy resin, cresol novolac epoxy resin, naphthalene-based epoxy resin, aliphatic epoxy resin, dicyclopentadiene phenol epoxy resin, biphenyl-based epoxy resin, other proper epoxy resins, or combinations thereof.

In some specific examples, bisphenol A epoxy resin can be commercial products with catalog numbers of NPEL 127, 128, 134, 901, 902, or 904 produced by Nan Ya Plastic Corporation; commercial products with catalog numbers of EPON^{™} 828, 830, 834, or 1001F produced by Hexion Inc.; commercial products with catalog numbers of BE 114, 186, or 188 produced by Chang Chun Plastic Corporation; commercial products with catalog numbers of EP 4100, 4300, or 4700 produced by ADEKA Corporation; commercial products with catalog numbers of D.E.R. 331, 317, 324, or 214 produced by Dow Chemical Company.

In some specific examples, the bisphenol F epoxy resin can be a commercial product with a catalog number of NPEF 170 produced by Nan Ya Plastic Corporation; a commercial product with a catalog number of EPON^{™} 869 produced by Hexion Inc.; commercial products with catalog numbers of DER 806, or 807 produced by Mitsubishi Chemical Company; commercial products with catalog numbers of BE 170, 235, or 283 produced by Chang Chun Plastic Corporation.

In some specific examples, the phenolic epoxy resin can be commercial products with catalog numbers of NPPN 630, 638, or 640 produced by Nan Ya Plastic Corporation; commercial products of H series or HF series produced by Meiwa Plastic Industries; commercial products with catalog numbers of PNE 171, 172, 174, 175, 176, or 177 produced by Chang Chun Plastic Corporation.

In some specific examples, the cresol novolac epoxy resin can be commercial products with catalog numbers of ECN 1273, 1280, 1299, or 9511 produced by HUNTSMAN Corporation; commercial products with catalog numbers of NPCN-703 or 704 produced by Nan Ya Plastic Corporation; commercial products with catalog numbers of CNE-202, 220, or 200 produced by Chang Chun Plastic Corporation; commercial products with catalog numbers of CER-1020, EOCN-1020-62, EOCN-1020, EOCN-102S, EOCN-103S, or EOCN-104S produced by Nippon Kayaku Co., Ltd.

In some specific examples, the naphthalene-based epoxy resin can be a commercial product with a catalog number of VastPoxy-465 produced by Vast-Well Material Development Co., Ltd; a commercial product with a catalog number of Araldite^{®} MY 0816 produced by HUNTSMAN Corporation; commercial products with catalog numbers of EPICLON^{®} HP-5000, HP-4700, or HP-4710 produced by DIC Corporation. In some specific examples, the aliphatic epoxy resin can be commercial products with catalog numbers of D.E.R. 732 or D.E.R 736 produced by Dow Chemical Company; commercial products with catalog numbers of VastPoxy-4821, 428, 484, 486, or 430 produced by Vast-Well Material Development Co., Ltd.

In some specific examples, the dicyclopentadiene phenol epoxy resin can be a commercial product with a catalog number of HP-7200H produced by Dai Nippon Printing Co., Ltd; a commercial product with a catalog number of XD-1000 produced by Nippon Kayaku Co., Ltd; a commercial product with a catalog number of 655-B-75 produced by Zhe Jiang Derong Chemicals Co., Ltd; a commercial product with a catalog number of KES-7660 produced by Uniwin Chemical Co., Ltd; a commercial product with a catalog number of DNE 260 produced by Chang Chun Plastic Corporation; commercial products with catalog numbers of SEV-3460, SEV-3475, SEV-3408 or SEV-3410 produced by Shin-A T&C Co., Ltd; commercial products with catalog numbers of Tactix^{®} 556 or Tactix^{®} 756 produced by HUNTSMAN Corporation.

In some examples, the biphenyl epoxy resin can be a commercial product with a catalog number of Sinepoxy^{®} YX 4000 produced by Sinocure Chemical Co., Ltd; a commercial product with a catalog number of VastPoxy YF-4800 produced by Vast-Well Material Development Co., Ltd; a commercial product with a catalog number of BPNE 3501 produced by Hunan Jiashengde Material Technology Co., Ltd; a commercial product with a catalog number of jER YX4000 produced by Mitsubishi Chemical Company.

In some embodiments, the epoxy resin can also include a multifunctional epoxy resin containing a tri-functional epoxy resin and a tetra-functional epoxy resin. In some specific examples, the tri-functional epoxy resin includes glycidyl ethers of aminophenol, which can be commercial products with catalog numbers of Araldite^{®} MY 0510, MY 0500, MY 0600, or MY 0610 produced by Huntsman Advanced Materials, for example. In some specific examples, the tetra-functional epoxy resin includes methylenedianiline and tetraglycidyl-4,4'-methylenedianiline, in which the methylenedianiline can be a commercial product with a catalog number of Araldite^{®} MY 9655 produced by Huntsman Advanced Materials, for example, and tetraglycidyl-4,4'-methylenedianiline can be tetraglycidyl-4,4'-diaminodiphenylmethane (TGDDM), e.g., commercial products with catalog numbers of Araldite^{®} MY 721, MY 720, MY 725, MY 9663, MY 9634, or MY 965 produced by Huntsman Advanced Materials.

The thermosetting polyimide resin can be bismaleimide (BMI). In some specific examples, the bismaleimide can be N,N'-ethylenebismaleimide, N,N'-hexamethylenebismaleimide, N,N'-(1,3-phenylene) bismaleimide, N,N'-[1,3-(2-methylphenylene)]bismaleimide, N,N'-[1,3-(4-methylphenylene)]bismaleimide, N,N'-(1,4-phenylene)bismaleimide, bis(4-maleimide phenyl)methane, bis(3-methyl-4-maleimide phenyl)methane, 3,3 ' -dimethyl-5,5 ' -diethyl-4,4 ' -diphenylmethane bismaleimide, bis(4-maleimide phenyl)ether, bis(4-maleimide phenyl)sulfone, bis(4-maleimide phenyl)sulfide, bis(4-maleimide phenyl)ketone, bis(4-maleimide cyclohexyl)methane, 1,4-bis(4-maleimide phenyl)cyclohexane, 1,4-bis(maleimide methyl)cyclohexane, 1,4-bis(maleimide methyl)benzene, 1,3-bis(4-maleimidephenoxy)benzene, maleimide, bis[4-(3-maleimidephenoxy)phenyl]methane, bis[4-(4-maleimidephenoxy)phenyl]methane, 1,1-bis[4-(3-maleimidephenoxy)phenyl]ethane, 1,1-bis[4-(4-maleimidephenoxy)phenyl]ethane, 1,2-bis[4-(3-maleimidephenoxy)phenyl]ethane, 1,2-bis[4-(4-maleimidephenoxy)phenyl]ethane, 2,2-bis[4-(3-maleimidephenoxy)phenyl]propane, 2,2-bis[4-(4-maleimidephenoxy)phenyl]propane, 2,2-bis[4-(3-maleimidephenoxy)phenyl]butane, 2,2-bis[4-(4-maleimidephenoxy)phenyl]butane, 2,2-bis[4-(3-maleimidephenoxy)phenyl]-1,1,1,3,3,3-hexafluoropropane, 2,2-bis[4-(4-maleimidephenoxy)phenyl]-1,1,1,3,3,3-hexafluoropropane, 4,4'-bis(3-maleimidephenoxy)biphenyl, 4,4'-bis(4-maleimidephenoxy)biphenyl, bis[4-(3-maleimidephenoxy)phenyl]ketone, bis[4-(4-maleimidephenoxy)phenyl]ketone, bis(4-maleimide phenyl)disulfide, bis[4-(3-maleimidephenoxy)phenyl]sulfide, bis[4-(4-maleimidephenoxy)phenyl]sulfide, bis[4-(3-maleimidephenoxy)phenyl]sulfoxide, bis[4-(4-maleimidephenoxy)phenyl]sulfoxide, bis[4-(3-maleimidephenoxy)phenyl]sulfone, bis[4-(4-maleimidephenoxy)phenyl]sulfone, bis[4-(3-maleimidephenoxy)phenyl]ether, bis[4-(4-maleimidephenoxy)phenyl]ether, 1,4-bis[4-(4-maleimidephenoxy)-α,α-dimethylbenzyl]benzene, 1,3-bis[4-(4-maleimidephenoxy)-α,α-dimethylbenzyl]benzene, 1,4-bis[4-(3-maleimidephenoxy)-α,α-dimethylbenzyl]benzene, 1,3-bis[4-(3-maleimidephenoxy)-α,α-dimethylbenzyl]benzene, 1,4-bis[4-(4-maleimidephenoxy)-3,5-dimethyl-α,α-dimethylbenzyl]benzene, 1,3-bis[4-(4-maleimidephenoxy)-3,5-dimethyl-α,α-dimethylbenzyl]benzene, 1,4-bis[4-(3-maleimidephenoxy)-3,5-dimethyl-α,α-dimethylbenzyl]benzene, and 1,3-bis[4-(3-maleimidephenoxy)-3,5-dimethyl-α,α-dimethylbenzyl]benzene, for example.

Based on the epoxy resin is 100 mol%, a usage amount of the thermosetting polyimide resin can be 60 mol% to 90 mol%, for example, such as: 60 mol%, 65 mol%, 70 mol%, 75 mol%, 80 mol%, or 90 mol%. If the usage amount of the thermosetting polyimide resin is too low, the obtained thermoset would have low thermal stability (heat resistance) and low Young's modulus. If the usage amount of the thermosetting polyimide resin is too high, the obtained thermoset should have low fracture toughness and exhibit brittleness.

The modified polyetherimide can be an amine-terminated polyetherimide which can be obtained by subjecting a polyetherimide-nucleophile (PEI-Nu) modification. In other words, the modified polyetherimide can be obtained by reacting a nucleophile compound and a polyetherimide. In some embodiments, the nucleophile compound can have a nucleophile, in which the nucleophile refers to the functional group with lone pairs. In some specific examples, the nucleophile can be, for example, a hydroxyl group (-OH), a sulfhydryl group (-SH), a carboxyl group (-COOH), an amine group (-NH2), or other proper nucleophile.

In some specific examples, the polyetherimide may be a commercial product with a catalog number of RTP 2100 LF produced by RTP Company; commercial products with catalog numbers of 700193 or 700207 produced by Sigma-Aldrich Corporation; a commercial product with a catalog number of TECAPEI produced by Ensinger Co., Ltd; a commercial product with a catalog number of PEI produced by Technoform Co., Ltd.

The synthesis method of the modified polyetherimide can be referred to as "Use of reactive polyetherimide to modify epoxy thermosets. I. Synthesis of an amino-grafted polyetherimide" written by Leïla Bonnaud et. al. and published on August 21, 2004, in volume 40, issue 11, pages 2637-2643 in European Polymer Journal, which is incorporated herein by reference, and will be described briefly. First, the polyetherimide is dispersed in acetone at about 60°C. Then, the nucleophile compound is slowly added to perform a reaction for about 0.5 hour to 18 hours. After the reaction, filter paper is used for filtration, and acetone is used to rinse repeatedly. The modified polyetherimide can be obtained after drying. In the aforementioned embodiments, a weight mole ratio (g: mol) of the polyetherimide and the nucleophile compound can be (40~60) g: (0.2-0.3) mol, for example. In some specific examples, the nucleophile compound can be ethylenediamine, for example. In some embodiments, after drying, bromocresol green can be used to determine whether there are any amine residues in the modified polyetherimide.

Based on the epoxy resin being 100 use parts, a usage amount of the modified polyetherimide can be 5 use parts to 30 use parts, for example. If the usage amount of the modified polyetherimide was not in the abovementioned range, it would be unlikely to form the phase separation system and the desired sea-island or particulate morphologies, resulting in the obtained thermoset of low fracture toughness. In some embodiment, the weight ratio of the modified polyetherimide over the thermosetting is 5 weight percentage (wt.%) to 30.0 wt.%.

It is worth noting that the modified polyetherimide with a lower molecular weight is better. In some embodiments, the weight-average molecular weight (M_{w}) of the modified polyetherimide can be 5,000 g/mol to 30,000 g/mol, such as 9,000 g/mol to 20,000 g/mol, 9,000 g/mol to 11,000 g/mol, or even higher, for example, so as to obtain a stable phase separation system.

In some embodiments, an amine curing agent can include but not limited to aliphatic amine curing agent, cycloaliphatic amine curing agent, aromatic amine curing agent, dicyandiamide (DICY) curing agent, amine-terminated polyether curing agent, polyaminoamide curing agent, polyamine curing agent, polyamide curing agent, other proper amine curing agents, or any combination thereof.

In some specific examples, the aliphatic amine curing agent can be 2,2-dimethyl-1,3-propanediamine (neopentanediamine), hexamethylenediamine, diethylenediamine, ethylenediamine, octylamine, 1,3-diaminopropane, N,N-bis(3-aminopropyl)methylamine, diethylenetetraamine, diethylenetriamine, tetraethylenepentamine, pentaethylenehexamine, polyethylene-polyamine, 2,2,4-trimethylhexane-1,6-diamine, xylenediamine, and bis(aminocyclohexyl)methane.

In some specific examples, the cycloaliphatic amine curing agent can be 1,2-diaminocyclohexane, 1,4-diaminocyclohexane, bis(4-aminocyclohexyl)methane, bis(4-amino-3-methylcyclohexyl)methane, 2,2-bis(4-aminocyclohexyl)propane and 3-(aminomethyl)-3,5,5-trimethylcyclohexan-1-amine (isophoronediamine), for example.

In some specific examples, the aromatic amine curing agent can be 4-benzylaniline, bis(4-aminophenyl)methane, benzylamine, m-xylylenediamine, 3,3'- diaminophenyl sulfone, and 4,4'- diaminophenyl sulfone, for example. In some specific examples, dicyandiamide curing agent includes DICY7(dicyandiamide, produced by Japan Epoxy resin Co., Ltd.), for example.

In some specific examples, the amine-terminated polyether curing agent can be Jeffamines produced by Huntsman Chemical Co. Ltd., such as commercial products with catalog numbers of Jeffamine EDR-148, Jeffamine D-230, Jeffamine D-400, or Jeffamine T-403, for example. In some specific examples, the polyaminoamide curing agent can be the polyaminoamide obtained by aliphatic polyamine and dipolymer or tripolymer.

The ratio of the amine groups of the amine curing agent and the epoxide groups of the epoxy resin of the resin formulation can be 40 mole % to 90 mole %, for example, e.g., 50 mole %, 60 mole %, 70 mole %, or 80 mole %. If the usage amount of the amine curing agent was not enough, the obtained thermoset could not be cured. On the contrary, if the usage amount of the amine curing agent was too much, the curing agent easily remains, so the crosslinking density of the cured thermoset would be too low to be applied to various aspects.

In some embodiments, the resin formulation can optionally include a hardening accelerator. In some embodiments, the hardening accelerator can be an amine-based hardening accelerator, a guanamine-based hardening accelerator, an imidazole-based hardening accelerator, or a phosphonium-based hardening accelerator, for example.

In some better embodiments, the hardening accelerator can be amine-based hardening accelerator, e.g., trialkyl amine such as triethylamine and tributylamine, amine compounds such as 4-dimethylamino pyridine, dimethylbenzylamine, 2,4,6-tris(dimethylaminomethyl)phenol, 1,8-diazabicyclo[5.4.0]undec-7-ene (DBU), organic dihydrazide (product model of AMICURE VDH-J, AMICURE UDH, AMICURE LDH produced by Ajinomoto Co. Inc.), modified polyamine with tertiary amine, modified amine with urea bond, and modified polyamine with imidazole.

For example, the modified polyamine with tertiary amine can be commercial products with catalog numbers of EH4380S, EH3616S, EH5001P, or EH4375S produced by ADEKA Corporation; the modified amine with urea bond can be commercial products with catalog numbers of FXR-1020 and FXR-1081 produced by T&K TOKA Co., Ltd., for example; the modified polyamine with imidazole can be commercial products with catalog numbers of PN-23, PN-H, and PN-40 produced by Ajinomoto Co. Inc.; a commercial product with a catalog number of EH4346S produced by ADEKA Corporation; commercial products with catalog numbers of FXR-1121 and AIR PRODUCTS produced by T&K TOKA Co., Ltd.; a commercial product with a catalog number of SUNMIDE LH210 produced by Air Products Japan Inc. Any one or any combination of at least two of the aforementioned hardening accelerators can be used. In some embodiments, a usage amount of the hardening accelerator can be 0.5 use parts to 2 use parts, e.g., 0.5 use parts to 1.5 use parts, for example.

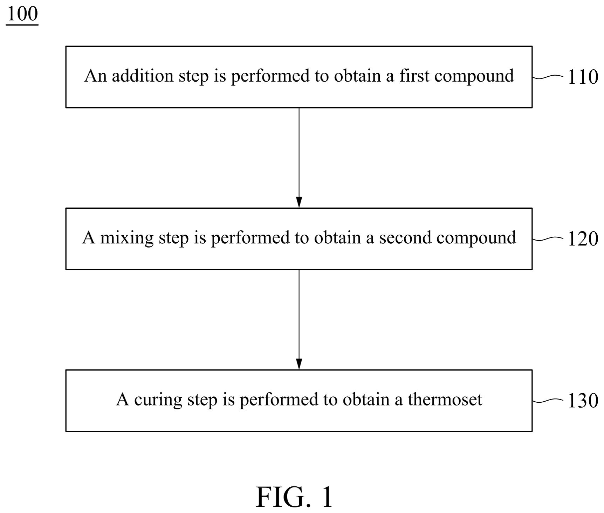

FIG. 1 illustrates a flow chart of a method 100 of manufacturing the thermoset according to some embodiments of the present invention. First, operation 110 is performed, in which an addition step is performed on a thermosetting polyimide resin and a modified polyetherimide, so as to obtain a first compound. As mentioned above, the modified polyetherimide has a nucleophile, so the modified polyetherimide can be grafted on one end of the thermosetting polyimide resin by Michael addition.

The temperature of the addition step can be 90°C to 130°C, for example. If the temperature of the addition step was too low, Michael addition could not occur. If the temperature of the addition step was too high, other undesired reactions might be easily triggered.

After operation 110 is performed, a mixing step is performed on the first compound and the epoxy resin, so as to obtain a second compound as shown in operation 120. The mixing step can be performed at the temperature same as that of the addition step, i.e., performed at 90°C to 130°C. If the temperature of the mixing step was too low, the first compound and the epoxy resin could not be mixed evenly. If the temperature of the mixing step was too high, the epoxide groups of the epoxy resin might undergo ring opening reaction, or the problem of oxidation and then deterioration of epoxy resin may occur.

In some embodiments, a stirring treatment is continuously performed during the addition step and the mixing step until the second compound becomes transparent and uniform. In some specific examples, the rate of the stirring treatment can be 300 rpm to 500 rpm, for example.

Then, after operation 120, a curing step as shown in operation 130 is performed, in which the curing step is performed on the second compound with the amine curing agent, so as to obtain a thermoset. In some embodiments, the curing step can be performed in a way that the temperature increases gradually, so as to reach a better curing effect. In a specific example, the curing step can include but not limited to a first curing treatment, a second curing treatment, and a third curing treatment. The first curing treatment can be performed at 130°C to 150°C for 1 hour to 3 hours, for example. The second curing treatment can be performed at 160°C to 195°C for 6 hours to 9 hours, for example. The third curing treatment can be performed at 200°C to 230°C for 6 hours to 9 hours, for example.

In some embodiments, before the addition step as shown in operation 110, a heating step can optionally be performed on a thermosetting polyimide resin from 10 minutes to 50 minutes at 150°C to 170°C, so the thermosetting polyimide resin forms oligomers. The weight-average molecular weights (M_{w}) of the oligomers can be 2,000 g/mol to 30,000 g/mol, for example. If the molecular weight of the thermosetting polyimide resin is in the abovementioned range, it will be beneficial to perform the addition step.

In some embodiments, after the curing step as shown in operation 130, the second compound is left to cool down. In some embodiments, the temperature of the second compound can be lowered down to 70°C to 90°C, for example, so as to control the rate of the curing step.

The thermoset obtained by the aforementioned method can include but not limited to an epoxy-rich phase mainly based on the epoxy resin and many sea-island morphologies. These sea-island morphologies are dispersed in the epoxy-rich phase. It is noted that the epoxy-rich phase also includes a small portion of the thermosetting polyimide resin, thereby enhancing the heat resistance of the obtained thermoset.

The sea-island morphologies are formed by the thermosetting polyimide resin modified by the modified polyetherimide such as amine-terminated polyetherimide. In detail, the sea-island morphologies can include but not limited to a core portion mainly based on the modified polyetherimide and a thermosetting polyimide resin-rich portion surrounding the core portion. It should be noted that the thermosetting polyimide resin has a good heat resistance, so it can mitigate the lower T_{g} nature of the modified polyetherimide of the thermoset. Therefore, the obtained thermoset can maintain excellent heat distortion temperature. In some embodiments, the average particle size of the sea-island morphologies is about 100 nm to 30 µm, such as 500 nm to 10 µm. The average particle size of the sea-island morphologies in the abovementioned range can help maintain the modulus of the thermoset, thereby benefiting the toughening effect.

The thermoset of the present invention has excellent fracture toughness and maintains good heat resistance as well as modulus. As proved by the experiment, the thermoset of the present invention has higher fracture toughness than that of a comparative thermoset obtained by the epoxy resin with a thermosetting polyimide resin (not modified by modified polyetherimide). In some embodiments, the stress intensity factor of the thermoset can be 0.50 MPa·m^{½} to 3.00 MPa·m^{½}, for example, e.g., 0.60 MPa·m^{½} to 0.90 MPa·m^{½}, or 0.70 MPa·m^{½} to 0.90 MPa·m^{½}.

Moreover, the thermoset of the present invention has a T_{g} onset and a T_{g} with little difference between compared to that of the comparative thermoset obtained by the epoxy resin added with the thermosetting polyimide resin (not modified by modified polyetherimide). That is, with the addition of the thermosetting polyimide resin modified by modified polyetherimide, the obtained thermoset can still maintain good heat resistance, in which the T_{g} onset is greater than or equal to 265°C, i.e., 280°C to 290°C.

Hereafter, the thermoset of the present invention has a Young's modulus that is 85% of that of the aforementioned comparative thermoset. That is, Young's modulus is still in a range of 3.5 GPa to 4.5 GPa, indicating that the thermoset obtained by using the thermosetting polyimide resin modified by modified polyetherimide can still maintain good modulus.

It is noted that there is a small difference in the storage modulus between the comparative thermoset and the thermoset of the present invention. However, the thermoset of the present invention has tensile strength and elongation at break higher than that of the comparative thermoset indicating that by adding the thermosetting polyimide resin modified by modified polyetherimide, the obtained thermoset can maintain other related physical properties.

### Preparation Example 1

Bismaleimide (BMI) was preheated and stirred at 165°C and stirred for 30 minutes, which allowed BMI to undergo limited homopolymerization to form BMI oligomers, and thus the system became a clear brown transparent melt. Then, a modified polyetherimide with a nucleophile (polyetherimide-nucleophile modification, PEI-Nu) was mixed with BMI, so as to obtain the first compound. The first compound was stirred at 125°C for 1 hour until the first compound became transparent.

Subsequently, under the same temperature, tetraglycidyl-4,4'-diaminodiphenylmethane (TGDDM) was mixed with the first compound to obtain the second compound. The second compound was rapidly stirred at 120°C for 30 minutes. After the temperature of the second compound was cooled down to 70°C to 90°C, a diamino diphenyl sulfone (DDS) curing agent was added and stirred for 30 minutes to obtain a thermoset.

After removing the bubbles in the thermoset in a vacuum oven at 120°C for 1 hour, the thermoset was poured into a mold to perform a curing step, thereby obtaining a thermoset sample. The curing step included a first stage at 130°C for 1 hour followed by 150°C for 1 hour, a second stage at 190°C for 6 hours, as well as a third stage at 226°C for 6 hours.

Based on a usage amount of TGDDM was 100 use parts, a usage amount of PEI-Nu was 5 use parts. Moreover, based on the usage amount of TGDDM was 100 mol%, a usage amount of BMI was 70 mol%. In addition, a ratio percentage of amine groups of DDS curing agent to epoxide groups of the TGDDM was 70 mole %.

### Preparation Examples 2 to 5

The methods to prepare the thermoset sample of Preparation Examples 2 to 5 were the same as that of Preparation Example 1. The differences were that the usage amounts of PEI-Nu of Preparation Examples 2 to 5 were 10.0 use parts, 12.5 use parts, 15.0 use parts, and 20.0 use parts, respectively, based on the usage amount of TGDDM was 100 use parts.

### Comparative Example 1

The thermoset sample of Comparative Example 1 used TGDDM and BMI not modified by PEI-Nu. In detail, BMI and TGDDM were rapidly stirred at 90°C to 130°C for 30 minutes. After the temperature of the mixture was cooled down to 70°C to 90°C, the DDS curing agent was added to perform the aforementioned curing step, thereby obtaining the thermoset sample of Comparative Example 1.

### Comparative Example 2

The method to prepare the thermoset sample of Comparative Example 2 was the same as that of Preparation Example 2, except that the modified polyetherimide was replaced with PEI, i.e., an unmodified polyetherimide.

### Evaluation methods

### Fracture toughness

The fracture toughness of the thermoset samples of Preparation Examples 1 to 5, Comparative Examples 1, and 2 could be evaluated with stress intensity factor (K_{1C}) obtained by the standard ASTM D5045 published by American Society for Testing and Materials (ASTM).

### Glass transition temperature (T_{g})

The T_{g} of the thermoset sample could be measured by differential scanning calorimetry (DSC). According to the temperature of the onset and the middle of the temperature interval, the T_{g} could be represented by T_{g} onset and T_{g}. It was noted that since PEI-Nu was added, there were two peaks in the heat mapping illustrates from the results of resin samples detected by DSC. One of the peaks corresponded to T_{g} of PEI-Nu, and another peak corresponded to T_{g} of the thermoset sample.

### Storage modulus and Young's modulus

Storage modulus could be obtained by the measurement of a dynamic mechanical analyzer (DMA). Moreover, the Young's modulus is obtained by uniaxial tensile tests followed by standard ASTM D638.

### Tensile strength and Elongation at break

The tensile strength and elongation at break of the thermoset samples could be evaluated with the standard ASTM D638 tensile test.

### Evaluation results

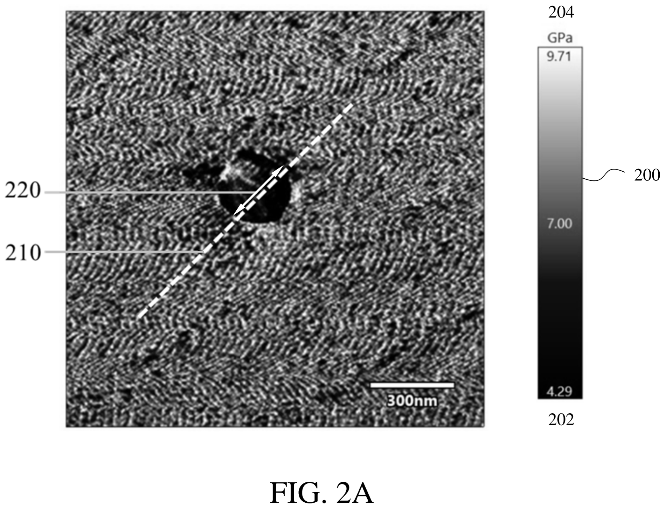

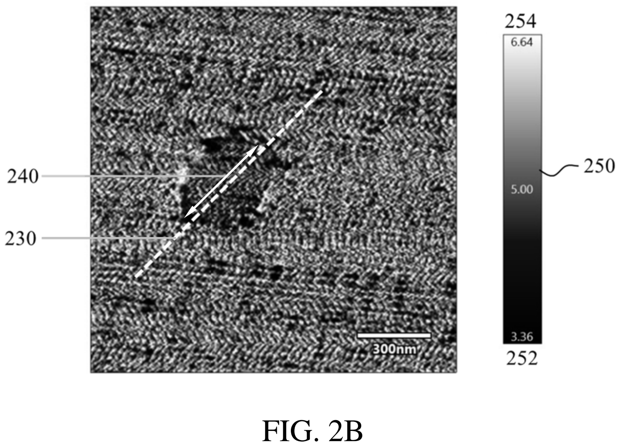

FIG. 2A and FIG. 2B illustrate AFM modulus images of the thermoset samples of Comparative Example 2 (FIG. 2A) and Preparation Example 2 (FIG. 2B), respectively. The straight bands 200 and 250 show the grayscales corresponding to the values of the Young's modulus, in which the dark ends 202 and 252 represent the lower Young's modulus, and the pale ends 204 and 254 represent the higher Young's modulus. The dotted lines 210 and 230 represent where the line-scan analysis conducts on the modulus profiles across the thermoset samples of Comparative Example 2 and Preparation Example 2, respectively. Interval 220 represents the unmodified polyetherimide-rich phase, and interval 240 represents the modified polyetherimide-rich phase. As shown in FIGs. 2 A and 2B, the thermoset sample of Preparation Example 2 (FIG. 2B) has a smaller drop in modulus between the matrix phase and the modified polyetherimide-rich phase compared to that between the matrix phase and the unmodified polyetherimide-rich phase of the thermoset sample of Comparative Example 2 (FIG. 2A). That is, the unmodified polyetherimide-rich phase of the thermoset sample of Comparative Example 2 has a lower modulus compared to that of the modified polyetherimide-rich phase from the thermoset sample of Preparation Example 2.

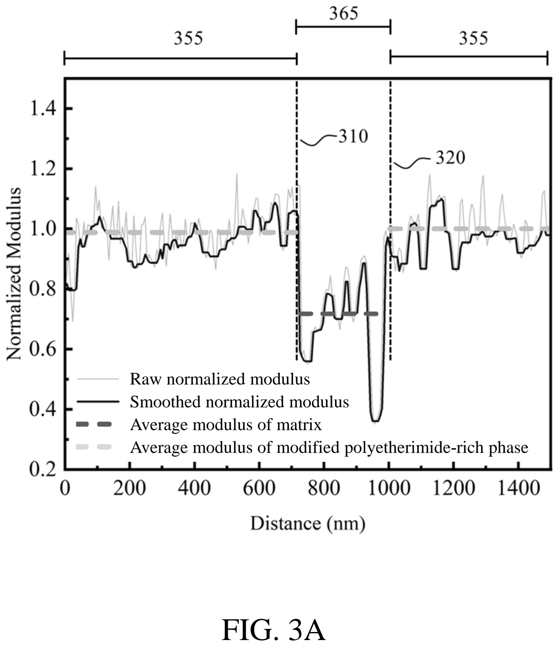

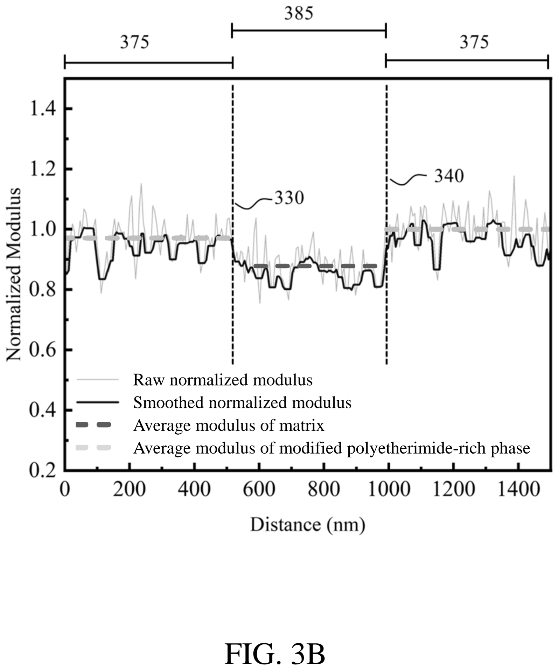

FIG. 3A and 3B illustrate curve charts of normalized Young's modulus of the thermoset sampled of Comparative Example 2 and Preparation Example 2 along the dotted lines 210 and 230 shown in FIGs. 2A and 2B, respectively. The x-axes represent distance (unit: nm), and the y-axes represent normalized Young's modulus. In FIG. 3A, the interval 355 represents the matrix phase, and the interval 365 represents the unmodified polyetherimide-rich phase of the thermoset sample of Comparative Example 2. In FIG. 3B, interval 375 represents the matrix phase, and interval 385 represents the modified polyetherimide-rich phase of the thermoset sample of Preparation Example 2. As shown in FIGs. 3A and 3B, the average modulus (higher than 0.8, e.g., 0.8 to 0.9, FIG. 3B) of the modified polyetherimide-rich phase of the thermoset sample of Preparation Example 2 is higher than the average modulus (lower than 0.8, FIG. 3A) of the unmodified polyetherimide-rich phase of the thermoset sample of Comparative Example 2.

Table 1 records the measurement results of the usage amounts, K_{1C}, T_{g}, and storage modulus of the thermoset samples of Preparation Examples 1 to 5 and Comparative Example 1. Table 2 records the measurement results of Young's modulus, tensile strength, and elongation at break of the thermoset samples of Preparation Examples 2, Preparation Example 5, and Comparative Examples 1 and 2.

**Table 1**

| Example | | Usage amount of PEI-Nu (use part) | Stress intensity factor (K_{1C}, MPa·m^{½}) | T_{g} onset (°C) | T_{g} (°C) | | Storage modulus (G', GPa) |
|---|---|---|---|---|---|---|---|
| | | | | | Resin sample | PEI-Nu | |
| Comparative Example 1 | | 0 | 0.43±0.03 | 265 | 282 | N/A | 1.23 |
| Preparation Example | 1 | 5.0 | 0.62±0.06 | 269 | 283 | 225 | 1.23 |
| | 2 | 10.0 | 0.72±0.04 | 265 | 281 | 227 | 1.21 |
| | 3 | 12.5 | 0.76±0.06 | 265 | 283 | 231 | 1.23 |
| | 4 | 15.0 | 0.82±0.05 | 265 | 281 | 232 | 1.18 |
| | 5 | 20.0 | 0.89±0.05 | 263 | 280 | 232 | 1.19 |

**Table 2**

| Example | | Usage amount of PEI or PEI-Nu (use part) | Young's modulus (E, GPa) | Tensile strength (σ, MPa) | Elongation at break (δ, %) |
|---|---|---|---|---|---|
| Comparative Example | 1 | 0 | 4.6±0.2 | 41±2 | 1.7±0.2 |
| | 2 | 10.0 (PEI) | 3.7±0.3 | 49±5 | 2.3±0.5 |
| Preparation Example | 2 | 10.0 (PEI-Nu) | 4.1±0.2 | 53±5 | 2.5±0.3 |
| | 5 | 20.0 (PEI-Nu) | 3.9±0.3 | 61±9 | 2.8±0.6 |

As shown in Tables 1 and 2, 5.0 use parts to 20.0 use parts of BMI modified by PEI-Nu was used in the thermoset samples of Preparation Examples 1 to 5, respectively, so the obtained thermoset samples had stress intensity factor higher than that of Comparative Example 1. In detail, the variation rate of the stress intensity factor of the thermoset samples of Preparation Examples 1 to 5 to that of Comparative Example 1 (i.e., the percentage of the difference of stress intensity factor of Preparation Examples 1 to 5 and that of Comparative Example 1 over that of the Comparative Example 1) were above 40%, indicating that the fracture toughness of the thermoset sample could substantially enhance by adding the BMI modified by PEI-Nu. Moreover, the thermoset sample of Preparation Example 2 has a stress intensity factor higher than the stress intensity factor (0.65±0.05, not shown in Table 1) of the thermoset sample of Preparation Example 2, indicating that the fracture toughness of the thermoset sample can greatly improve by the incorporation of PEI-Nu (i.e., the modified polyetherimide) when compared to PEI (i.e., the unmodified polyetherimide).

However, there were small differences in T_{g} onset, T_{g}, and Young's modulus of the thermoset sample between Preparation Examples 1 to 5 and Comparative Example 1. In detail, the percent differences in T_{g} onset and T_{g} between the thermoset samples of Preparation Examples 1 and 5 to that of Comparative Example 1 were within ±2%. Moreover, the percent differences in Young's modulus between the thermoset samples of Preparation Examples 1 and 5 to that of Comparative Example 1 were within ±20%. The results showed that the addition of BMI modified by PEI-Nu had small negative effects on the intrinsic heat resistance and modulus of the thermoset sample.

It was noted that there were small differences in the storage modulus of the thermoset sample between Preparation Examples 1 to 5 and Comparative Examples 1 as well as 2. Moreover, there were small differences in tensile strength as well as elongation at break between the thermoset samples of Preparation Examples 2 as well as 5 and Comparative Examples 1 as well as 2. The results indicated that the BMI modified by PEI-Nu had no negative effects on other related physical properties of the thermoset sample.

Based on the aforementioned embodiments, in the resin formulation, the thermoset, and the method of manufacturing the same of the present invention, the advantage is that the modified polyetherimide used has a nucleophile, so the modified polyetherimide can modify the thermosetting polyimide resin, and the obtained thermoset has a specific phase separation system, resulting in excellent fracture toughness as well as maintaining good heat resistance and modulus. Therefore, the present invention can be applied to the manufacture of polyacrylonitrile carbon fiber composite material. Moreover, the thermoset exhibits great mechanical and physical properties, and can be used as the components of the high-level structures of aircrafts, spacecraft and vehicles.

## Claims

1. A resin formulation, **characterized by** comprising:
an epoxy resin;
a thermosetting polyimide resin, wherein the thermosetting polyimide resin comprises bismaleimide (BMI), and based on the epoxy resin is 100 mol%, a usage amount of the thermosetting polyimide resin is 60 mol% to 90 mol%;
a modified polyetherimide, comprising a nucleophile, wherein the nucleophile comprises a hydroxyl group, a sulfhydryl group, a carboxyl group, and/or an amine group, and based on the epoxy resin is 100 use parts, a usage amount of the modified polyetherimide is 5 use parts to 30 use parts; and
an amine curing agent, wherein a ratio of amine groups of the amine curing agent and epoxide groups of the epoxy resin is 40 mole % to 90 mole %.

2. The resin formulation of claim 1, **characterized by** further comprising a hardening accelerator, wherein based on the epoxy resin is 100 use parts, a usage amount of the hardening accelerator is 0.5 use parts to 2.0 use parts.

3. The resin formulation of claim 1 or claim 2, **characterized by** wherein a molecular weight of the modified polyetherimide is 5,000 g/mol to 30,000 g/mol.

4. The resin formulation of any one of claims 1-3, **characterized by** wherein the epoxy resin comprises bisphenol A epoxy resin, bisphenol F epoxy resin, phenolic epoxy resin, cresol novolac epoxy resin, naphthalene-based epoxy resin, aliphatic epoxy resin, dicyclopentadiene phenol epoxy resin, biphenyl-based epoxy resin, aminophenol, methylenedianiline and tetraglycidyl-4,4'-methylenedianiline or combination thereof.

5. The resin formulation of any one of claims 1-4, **characterized by** wherein the amine curing agent comprises aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.

6. A thermoset, **characterized by** comprising:
an epoxy-rich phase, comprising an epoxy resin and a thermosetting polyimide resin; and
a plurality of sea-island morphologies, evenly dispersed in the epoxy-rich phase, wherein each of the plurality of the sea-island morphologies comprises:
a core portion, comprising modified polyetherimide; and
a thermosetting polyimide resin-rich portion, wherein the core portion is surrounded by the thermosetting polyimide resin-rich portion, the thermosetting polyimide resin-rich portion comprises a thermosetting polyimide resin, and the thermosetting polyimide resin comprises bismaleimide (BMI), and
wherein a stress intensity factor of the thermoset is 0.50 MPa·m^{½} to 3.00 MPa·m^{½}.

7. The thermoset of claim 6, **characterized by** wherein an average particle size of the plurality of sea-island morphologies is 100 nm to 30 µm.

8. A method of manufacturing a thermoset, **characterized by** comprising:
performing an addition step on a thermosetting polyimide resin and a modified polyetherimide at 90°C to 130°C, so as to obtain a first compound;
performing a mixing step on the first compound and an epoxy resin at 90° C to 130°C, so as to obtain a second compound ; and
performing a curing step on the second compound by using an amine curing agent, so as to obtain the thermoset, and
wherein based on the epoxy resin is 100 mol%, a usage amount of the thermosetting polyimide resin is 60 mol% to 90 mol%, the modified polyetherimide comprises a nucleophile, the nucleophile comprises a hydroxyl group, a sulfhydryl group, a carboxyl group, and/or amine group, based on the epoxy resin is 100 use parts, a usage amount of the modified polyetherimide is 5 use parts to 30 use parts, and a ratio of amine groups of the amine curing agent and epoxide groups of the epoxy resin is 40 mol % to 90 mol %.

9. The method of manufacturing the thermoset of claim 8, **characterized by** further comprising performing a heating step on the thermosetting polyimide resin at 150°C to 170°C from 10 minutes to 50 minutes before the addition step.

10. The method of manufacturing the thermoset of claim 8 or claim 9, **characterized by** further comprising decreasing a temperature of the second compound to 70°C to 90°C before the curing step.

11. The method of manufacturing the thermoset of claim 8, wherein the curing step comprises a first curing treatment performed at 130°C to 150°C for 1 hour to 3 hours, a second curing treatment performed at 160°C to 195°C for 6 hours to 9 hours, and a third curing treatment performed at 200°C to 230°C for 6 hours to 9 hours.

12. The method of manufacturing the thermoset of claim 8, wherein the addition step and the mixing step comprise a stirring treatment respectively, and the stirring treatment is performed at 300 revolution per minute (rpm) to 500 rpm.

13. The method of manufacturing the thermoset of claim 8, wherein the modified polyetherimide is obtained by reacting a polyetherimide and a nucleophile compound, and a weight mole ratio (g: mol) of the polyetherimide and the nucleophile compound is (40-60) g: (0.2-0.3) mol.

14. The method of manufacturing the thermoset of claim 8, wherein the epoxy resin comprises bisphenol A epoxy resin, bisphenol F epoxy resin, phenolic epoxy resin, cresol novolac epoxy resin, naphthalene-based epoxy resin, aliphatic epoxy resin, dicyclopentadiene phenol epoxy resin, biphenyl-based epoxy resin, aminophenol, methylenedianiline and tetraglycidyl-4,4'-methylenedianiline or combination thereof.

15. The method of manufacturing the thermoset of claim 8, wherein the amine curing agent comprises aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.
